# EUROPÄISCHE PATENTSCHRIFT

(11) **EP 1 966 459 B1**
(45) Veröffentlichungstag und Bekanntmachung des Hinweises auf die Patenterteilung: **11.11.2009**
(21) Anmeldenummer: 06830669.5
(22) Anmeldetag: 15.12.2006
(51) Int. Cl.: E05F 11/38, E05F 11/48

(54) **SCHIENENLOSE FENSTERHEBERANORDNUNG, TÜRMODUL UND KRAFTFAHRZEUGTÜR**
RAILLESS WINDOW WINDER ARRANGEMENT, DOOR MODULE AND MOTOR VEHICLE DOOR
DISPOSITIF LEVE-VITRES SANS RAILS, MODULE DE PORTE ET PORTE DE VOITURE

(30) Priorität: 19.12.2005 DE 102005061009
(43) Veröffentlichungstag der Anmeldung: 10.09.2008
(73) Patentinhaber: Faurecia Innenraum Systeme GmbH, 76767 Hagenbach (DE)
(72) Erfinder: MANGOLD, Claus, 34298 Helsa St. Ottilien (DE); HUEGE, Carsten, 37287 Wehretal (DE); BOECKER, Frank, 58089 Hagen (DE); HERMANN, Marko, 37269 Eschwege (DE); SCHLIWA, Enrico, 99819 Lauchröden (DE)
(74) Vertreter: Richardt, Markus Albert
(86) Internationale Anmeldenummer: PCT/EP2006/069784
(87) Internationale Veröffentlichungsnummer: WO 2007/071629

(56) Entgegenhaltungen:
- DE-A1- 10 255 461
- DE-A1-102004 017 645
- FR-A1- 2 781 006
- FR-A1- 2 830 894

## Beschreibung

Die Erfindung betrifft eine schienenlose Fensterheberanordnung, ein Türmodul mit einer Fensterheberanordnung und eine Kraftfahrzeugtür mit einer Fensterheberanordnung.

Ausgangspunkt der vorliegenden Erfindung ist die aus der DE 10 2004 017 645 A1 bekannte Fensterheberanordnung. Hieraus sind Mittel zum Positionieren und Fixieren des Mitnehmers zur Erleichterung der Montage einer Fensterscheibe bekannt. In der dort offenbarten Ausführungsform sind die Mittel zum Positionieren und Fixieren des Mitnehmers durch zwei Auflageblöcke gegeben, die einstückig an das Wandteil, das heißt die Tür-Innenplatte, eingeformt sind, und als untere Anschläge für den Mitnehmer dienen.

So genannte schienenlose Fensterheberanordnungen, der in der DE 10 2004 017 645 A1 genannten Art, welche ohne eine Führungsschiene für den Mitnehmer auskommen, sind ebenfalls offenbart in der DE 102 55 461 A1 und der zum Anmeldezeitpunkt unveröffentlichten DE 10 2005 037 324.

Aus der DE 195 05 624 C2 ist eine Vorrichtung zum Verbinden einer Fensterscheibe mit dem Mitnehmer eines Fensterhebers durch eine Schnappverbindung bekannt.

Aus der DE 202 18 678 U1 ist eine Tür-Innenplatte bekannt, die als Träger für verschiedene Elemente eines Fensterhebers dient. Die Tür-Innenplatte hat eine Öffnung zur Montage des Fensterhebers von der Tür-Innenseite.

Dem gegenüber liegt der Erfindung die Aufgabe zu Grunde, eine verbesserte schienenlose Fensterheberanordnung, ein verbessertes Türmodul und eine verbesserte Kraftfahrzeugtür mit einer Fensterheberanordnung zu schaffen, um die Montage insbesondere einer Fensterscheibe mit großem Glassdrop zu vereinfachen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird eine schienenlose Fensterheberanordnung mit einem Mitnehmer für eine Fensterscheibe geschaffen. Die Fensterheberanordnung hat eine Tür-Innenplatte und Positionierungsmittel zur Positionierung des Mitnehmers in einer Montageposition zur Montage der Fensterscheibe.

Die Positionierungsmittel können eine erste und eine zweite Stellung einnehmen. In der ersten Stellung definieren die Positionierungsmittel die Montageposition und in der zweiten Stellung geben die Positionierungsmittel eine Bewegung des Mitnehmers zum Öffnen oder Schließen der montierten Fensterscheibe frei. Die Positionierungsmittel sind zwischen der ersten und der zweiten Stellung schwenkbar. Außerdem haben die Positionierungsmittel ein elastisches Element zur Rückstellung in die zweite Stellung nach der Montage der Fensterscheibe. Alternativ oder zusätzlich können Klemmelemente zur Feststellung der Positionierungsmittel in der zweiten Stellung vorhanden sein. Hierdurch werden die Positionierungsmittel nach der Montage sicher in ihrer zweiten Stellung gehalten, so dass sie nicht die Bewegung des Mitnehmers beim Öffnen und Schließen der Fensterscheibe stören können.

Die erfindungsgemäße Ausbildung der Positionierungsmittel hat den Vorteil, dass die Positionierungsmittel nicht gleichzeitig die maximale Öffnung der Fensterscheibe definieren, wie das bei der DE 10 2004 017 645 A1 der Fall ist. Vielmehr können die Positionierungsmittel im Prinzip an einer beliebigen Stelle entlang des Verfahrwegs des Mitnehmers angeordnet sein. Dies ist insbesondere zur Montage einer Fensterheberanordnung vorteilhaft, bei der die Fensterscheibe ganz oder fast ganz in der Tür versenkt werden kann. Den Grad der Versenkbarkeit der Fensterscheibe in der Kraftfahrzeugtür bezeichnet man auch als "Glassdrop", wobei ein Glassdrop von 100 % bedeutet, dass die Fensterscheibe vollständig versenkbar ist.

Bei einer vollständig oder fast vollständig versenkbaren Fensterscheibe ragt die Fensterscheibe in ihrer vollständig geöffneten Position nicht oder fast nicht über die Türbrüstung hinaus, so dass eine Montage in der vollständig geöffneten Position schwierig ist. Die Erfindung ermöglicht dagegen die Anordnung der Positionierungsmittel so, dass die Fensterscheibe in der Montageposition über die Türbrüstung hinaus ragt, auch wenn es sich um einen Fensterheber mit einem großen Glassdrop, insbesondere 100 % Glassdrop handelt. In der Montageposition kann also der über die Türbrüstung hinaus ragende Abschnitt der Fensterscheibe bequem angefasst werden, was die Montage erheblich vereinfacht.

In einer Ausführungsform der Erfindung sind die Positionierungsmittel in einem mittleren Bereich der Tür-Innenplatte angeordnet.

In einer Ausführungsform der Erfindung sind die Positionierungsmittel an der Tür-Innenplatte beweglich gelagert und zur lösbaren Fixierung des Mitnehmers in der ersten Stellung ausgebildet. Beispielsweise können die Positionierungsmittel schwenkbar und / oder verschiebbar sein, so dass zwischen der ersten und der zweiten Stellung gewählt werden kann. Ferner können die Positionierungsmittel auch ganz oder teilweise von der Tür-Innenplatte lösbar sein, nachdem die Montage der Fensterscheibe erfolgt ist.

Statt an der Tür-Innenplatte können die Positionierungsmittel auch an dem Mitnehmer beweglich, das heißt beispielsweise schwenkbar, verschiebbar oder zumindest teilweise lösbar, gelagert sein.

In einer Ausführungsform der Erfindung sind die Positionierungsmittel zur Aufnahme der zur Ausbildung einer Rastverbindung zwischen dem Mitnehmer und der Fensterscheibe eingeleiteten Kraft ausgebildet. Wenn dies nicht der Fall ist, wird vor der Montage der Fensterscheibe zunächst ein Antriebselement an dem Mitnehmer angebracht, wie zum Beispiel das Zugseil, wenn der Fensterheber als Seilzug-Fensterheber ausgebildet ist. In diesem Fall kann das Zugseil die Kraft, mit der die Fensterscheibe zum Ausbilden der Rastverbindung in den Mitnehmer gedrückt wird, aufnehmen.

In einem weiteren Aspekt betrifft die Erfindung ein Türmodul oder einer Kraftfahrzeugtür mit einer erfindungsgemäßen Fensterheberanordnung. Beispielsweise handelt es sich um eine Fensterheberanordnung ohne Führungsschiene für den Mitnehmer und einem relativ großen Glassdrop, von zum Beispiel nahe 100 %.

Beschrieben sei außerdem ein Verfahren zur Montage einer Fensterheberanordnung. Zur Montage wird zunächst der Mitnehmer positioniert, indem die Positionierungsmittel in eine erste Stellung gebracht werden. Nach der Verbindung des Mitnehmers mit der Fensterscheibe, zum Beispiel durch Verrasten, werden die Positionierungsmittel in eine zweite Stellung gebracht, in der die Bewegung des Mitnehmers zum Öffnen oder Schließen der montierten Fensterscheibe freigegeben ist.

Im weiteren werden Ausführungsformen der Erfindung mit Bezugnahme auf die Zeichnungen näher erläutert. Es zeigen:
- Figur 1: eine schematische Darstellung einer Ausführungsform einer erfin- dungsgemäßen Kraftfahrzeug-Tür,
- Figur 2: eine seitliche Schnittansicht einer Ausführungsform von erfindungsge- mäßen Positionierungsmitteln für einen Mitnehmer,
- Figur 3: eine perspektivische Ansicht einer Ausführungsform erfindungsgemä- ßer Positionierungsmittel, die an einer Tür-Innenplatte schwenkbar ge- lagert sind,
- Figur 4: eine perspektivische Ansicht der Ausführungsform der Figur 3, wenn sich die Positionierungsmittel in der ersten Stellung befinden,
- Figur 5: eine Ausführungsform erfindungsgemäßer Positionierungsmittel in der ersten Stellung
- Figur 6: eine weitere Ausführungsform erfindungsgemäßer Positionierungsmittel in der ersten Stellung,
- Figur 7: die Ausführungsform der Figur 6, wobei sich die Positionierungsmittel in der zweiten Stellung befinden,
- Figur 8: eine Schnittansicht einer Ausführungsform erfindungsgemäßer Positio- nierungsmittel mit einer Darstellung der ersten und zweiten Stellungen,
- Figur 9: die Ausführungsform der Figur 8, mit einer Schnittansicht der Tür- Innenplatte, wenn sich die Positionierungsmittel in der zweiten Stellung befinden,
- Figur 10: eine weitere Ausführungsform erfindungsgemäßer Positionierungsmittel in einer Schnittdarstellung,
- Figur 11: eine perspektivische Ansicht eines klauenförmigen Positionierungsele- ments der Ausführungsform gemäß Figur 10,
- Figur 12: eine Schnittansicht einer Ausführungsform erfindungsgemäßer Positio- nierungsmittel, wobei die Positionierungsmittel verschiebbar gelagert sind.

Einander entsprechende Elemente der nachfolgend beschriebenen Ausführungsformen der Erfindung sind mit gleichen Bezugszeichen gekennzeichnet.

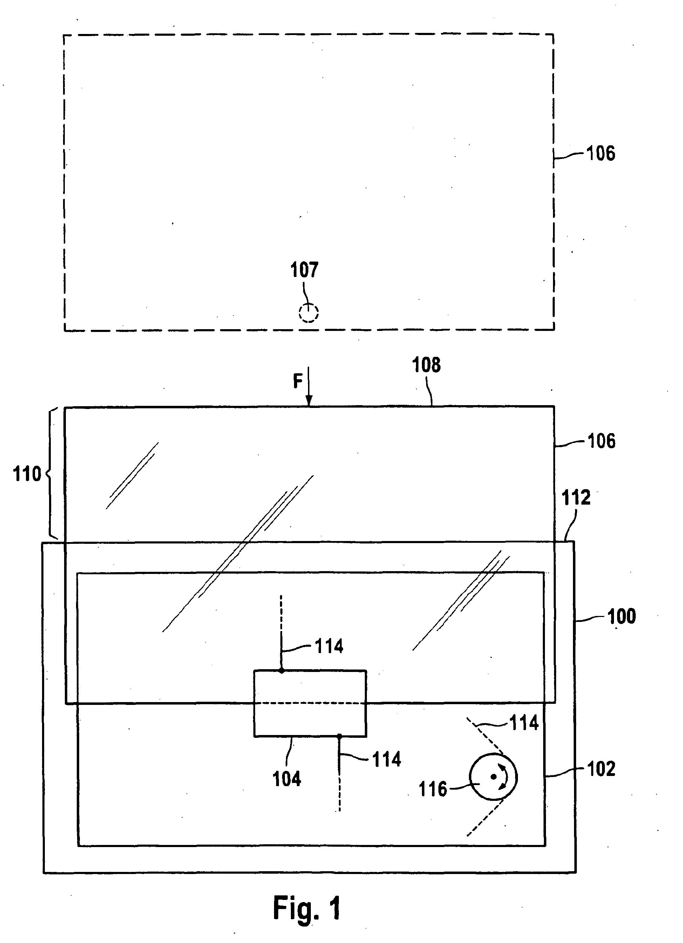

Die Figur 1 zeigt eine Kraftfahrzeug-Tür 100 mit einer Tür-Innenplatte 102. Die Tür-Innenplatte 102 dient als Träger zum Beispiel für verschiedene Antriebselemente einer Fensterheberanordnung. Gleichzeitig kann die Tür-Innenplatte als Trennwand zwischen einem Nassbereich und einem Trockenbereich der Kraftfahrzeug-Tür 100 dienen.

Die Fensterheberanordnung hat einen Mitnehmer 104 zur Verbindung mit einer Fensterscheibe 106. An der Tür-Innenplatte 102 und /oder an dem Mitnehmer 104 sind in der Figur 1 nicht gezeigte Positionierungsmittel angeordnet. Die Positionierungsmittel haben eine erste Stellung zur Festlegung einer Montageposition zur Verbindung der Fensterscheibe 106 und des Mitnehmers 104 und eine zweite Stellung, in der eine Bewegung des Mitnehmers zum Öffnen oder Schließen der montierten Fensterscheibe entlang eines Verfahrwegs des Mitnehmers freigegeben ist.

Die Figur 1 zeigt den Mitnehmer 104 in seiner Montageposition, die sich bei der hier betrachteten Ausführungsform der Fensterheberanordnung in etwa in der Mitte der Tür-Innenplatte 102 befindet. Nachdem der Mitnehmer 104 in der Montageposition positioniert worden ist, wird die Fensterscheibe 106 von oben aus ihrer gestrichelt gezeigten postition in ihre in ausgezogenen Linien gezeigte Montageposition gebracht. In der Montageposition wird die Fensterscheibe 106 mit dem Mitnehmer 104 verbunden, indem beispielsweise auf den oberen Rand 108 der Fensterscheibe 106 eine Kraft F ausgeübt wird, aufgrund derer der Mitnehmer 104 und die Fensterscheibe 106 eine Rastverbindung eingehen. Beispielsweise hat die Fensterscheibe 106 an ihrem unteren Rand ein Scheibenloch 107 zur Ausbildung der Rastverbindung mit dem Mitnehmer 104.

Besonders vorteilhaft ist bei der in der Figur 1 gezeigten Ausführungsform, dass die Fensterscheibe 106 in ihrer Montageposition mit ihrem Bereich 110 über die Türbrüstung 112 der Kraftfahrzeug-Tür 100 herausragt. Dies ermöglicht eine bequeme Montage der Fensterscheibe 106 und insbesondere die Einleitung der Kraft F.

Vor oder nach der Verbindung der Fensterscheibe 106 und des Mitnehmers 104 wird der Mitnehmer 104 mit einem Antriebselement der Fensterheberanordnung verbunden. Bei dem Antriebselement handelt es sich beispielsweise um ein Seil 114, welches über eine Antriebstrommel 116 der Fensterheberanordnung geführt ist. Die zur Ausbildung der Rast- oder Schnappverbindung zwischen dem Mitnehmer 104 und der Fensterscheibe 106 ausgeübte Kraft F wird durch die Positionierungsmittel und / oder durch das Seil 114 aufgenommen.

Beispielsweise handelt es sich bei der Fensterheberanordnung der Figur 1 um eine Ausführungsform mit einem relativ großen Glassdrop, beispielsweise einem Glassdrop von 100 % oder nahe 100 %. Dies bedeutet, dass die Fensterscheibe 106 nach ihrer Montage durch Betätigung der Fensterheberanordnung vollständig oder fast vollständig unter die Türbrüstung 112 verfahren werden kann, so dass auch der Bereich 110 der Fensterscheibe 106 unterhalb der Türbrüstung 112 verschwindet.

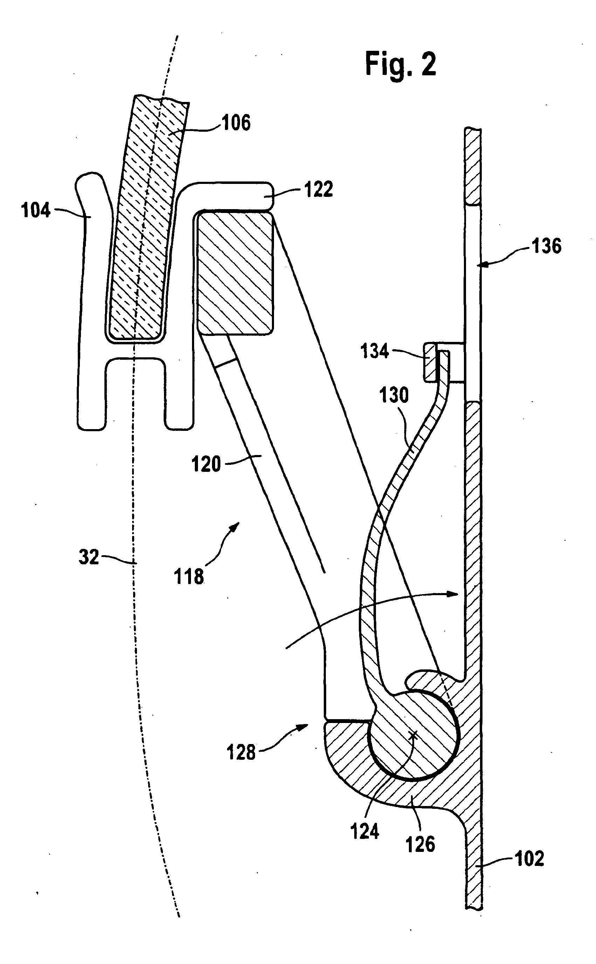

Die Figur 2 zeigt eine Ausführungsform der Positionierungsmittel 118. Die Positionierungsmittel 118 haben ein armförmiges Positionierungselement 120, das in seiner in der Figur 2 gezeigten ersten Stellung einem Anschlag an einem Anschlagsbereich 122 des Mitnehmers 104 bildet. Durch diesen Anschlag wird die Montageposition des Mitnehmers 104 festgelegt.

Das Positionierungselement 120 ist an der Tür-Innenplatte 102 um eine Achse 124 schwenkbar gelagert. Hierzu ist an der Tür-Innenplatte 102 ein Lager 126 ausgebildet. Die Schwenkposition des Positionierungselements 120 in seiner ersten Stellung wird durch einen zwischen dem Positionierungselement 120 und dem Lager 126 gebildeten Anschlag 128 festgelegt.

Die Positionierungsmittel 118 haben ein elastisches Element 130, wie zum Beispiel eine Rückstellfeder, welche dazu dient, das Positionierungselement 120 aus seiner in der Figur 2 gezeigten ersten Stellung in eine zweite Stellung zu bringen, und dort zu halten; in der zweiten Stellung wird eine Bewegung des Mitnehmers 104 entlang seines Verfahrweges 132 zum Öffnen und Schließen der montierten Fensterscheibe 106 freigegeben. Das elastische Elements 130 wird von einem Schnapphaken 134 gehalten. Das Montageloch 136 in der Tür-Innenptatte 102 ist insbesondere für Reparatur- und Wartungsarbeiten vorteilhaft.

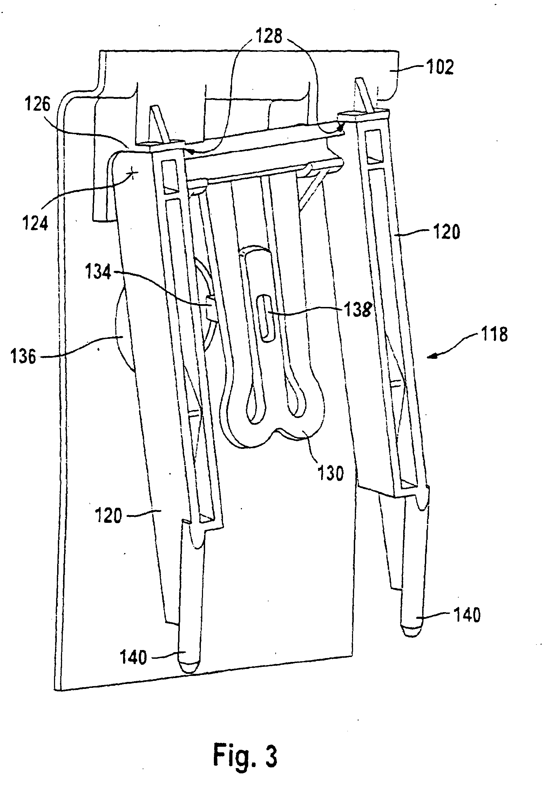

Die Figur 3 zeigt eine Ausführungsform der Positionierungsmittel 118 in perspektivischer Ansicht, wenn sich die Positionierungselemente 120 in der ersten Stellung befinden. Die Figur 3 zeigt einen mittleren Bereich der Tür-Innenplatte 102, an dem die Positionierungsmittel 118 angeordnet sind.

In der hier betrachteten Ausführungsform hat das elastische Element 130 einen Aufnahmeschlitz 138 für einen Schnapphaken 134, der an der Tür-Innenplatte 102 so angeordnet ist, dass er durch das Montageloch 136 zugänglich ist.

Die Figur 3 zeigt die Positionierungsmittel 118, wenn der Schnapphaken 134 nicht in dem Aufnahmeschlitz 138 eingerastet ist. Nachdem der Schnapphaken 124 in den Aufnahmeschlitz 138 eingerastet ist, hält das elastische Element 130 die Positionierungsmittel 118 in der zweiten Stellung. In diesem Fall wirkt also eine Rückstellkraft auf die Positionierungsmittel 118.

In der in der Figur 3 gezeigten ersten Stellung der Positionierungsmittel 118 werden die Anschläge 128 zwischen den Positionierungsmitteln 118 und dem Lager 126 gebildet, wodurch die Schwenkposition in der ersten Stellung definiert ist. An ihrem zu der Achse 124 entfernten Ende haben die Positionierungselemente 120 jeweils einen Führungsstift 140.

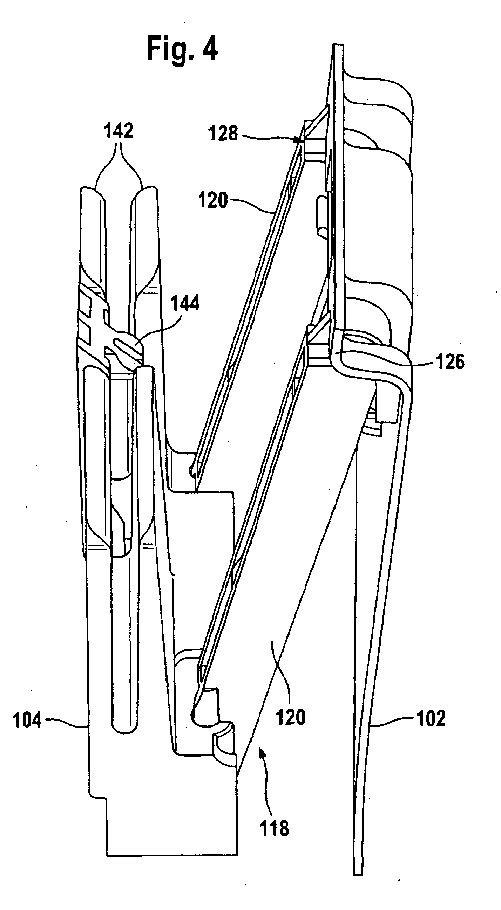

Wie in der Figur 4 dargestellt, werden die Führungsstifte 140 in entsprechende Ausnehmungen des Mitnehmers 104 eingeführt, um diesen in der Montageposition zu fixieren. Der Mitnehmer 104 hat in dieser Ausführungsform ein Paar elastisch spreizbarer Backen 142 mit einem haken- oder stiftförmigen Schnappelement 144 zum Einrasten in ein entsprechendes Scheibenloch 107 der Fensterscheibe 106 (vgl. Figuren 1 und 2).

Durch die Positionierungsmittel 118 wird der Mitnehmer 104 also in seiner Montageposition fixiert. In dieser Position wird die Fensterscheibe von oben zwischen die Backen 142 geschoben, so dass das Schnappelement 144 in das Scheibenloch 107 (vgl. Figur 1) einrastet.

Zur Montage der Fensterscheibe 106 (vgl. Fig. 1) wird zunächst der Schnapphacken 134 in den Aufnahmeschlitz 138 eingerastet, wodurch die Positionierungsmittel 118 in die zweite Stellung gebracht werden. Danach werden die Positionierungselemente 120 z.B. manuell entgegen der Rückstellkraft des elastischen Elements 130 in die erste Stellung, d.h. die Montageposition, gebracht, die in der Fig. 4 gezeigt ist. In der ersten Stellung wird der Anschlag 128 gebildet.

Nach der Montage der Fensterscheibe 106 und des Seils 114 (vgl. Fig. 1), wird der Mitnehmer 104 durch Betätigung der Fensterheberanordnung verfahren, so dass die Führungsstifte 140 freigegeben werden; in der hier betrachteten Ausführungsform wird der Mitnehmer 104 hierzu nach unten verfahren, d.h. in Öffnungsrichtung der Fensterscheibe 106. Aufgrund der Rückstellkraft des elastischen Elements 130 (vgl. Fig. 2 und 3) schwenken die Positionierungselemente 120 in ihre Ausgangsstellung, d.h. die zweite Stellung zurück, so dass der Verfahrweg 132 des Mitnehmers 104 vollständig freigegeben wird.

Zum Austausch der Fensterscheibe werden die Positionierungselemente 120 manuell durch das Montageloch 136 aus der zweiten in die erste Stellung gebracht. Beispielsweise kann ein Kraftfahrzeugmechaniker mit einem Schraubenzieher durch das Montageloch 136 hindurch auf eines der Positionierungselemente 120 drücken, so das die Positionierungselemente 120 entgegen der Rückstellkraft des elastischen Elements 130 in die erste Position gebracht werden. Danach wird durch Betätigung der Fensterheberanordnung der Mitnehmer 104 so verfahren, das er in die Positionierungselemente 120, also z.B. in die Führungsstifte 140, einfährt, so dass er die in der Fig. 4 gezeigt Montageposition gebracht wird. In dieser Stellung kann die Verbindung zwischen dem Mitnehmer 104 und der Fensterscheibe 106 durch das Montageloch 136 mit einem geeigneten Werkzeug gelöst und die Fensterscheibe ausgetauscht werden.

Statt durch eine Schnappverbindung können die Fensterscheibe 106 und der Mitnehmer 104 auch anders verbunden werden, z.B. durch eine Verschraubung, durch eine Klebeverbindung, Klemmverbindung oder dergleichen.

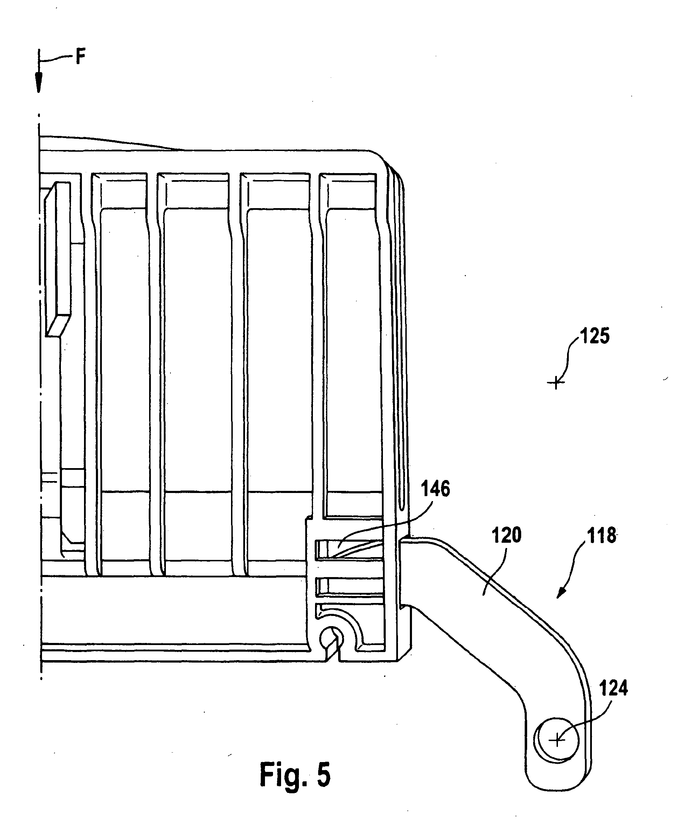

Die Figur 5 zeigt eine Seite des Mitnehmers 104 und der Positionierungsmittel 118. Die Positionierungselemente 120 sind hier als Sperrhaken ausgebildet, die in entsprechende Ausnehmungen 146 des Mitnehmers 104 eingreifen können. Die Figur 5 zeigt eines der Positionierungselemente 120 in der ersten Stellung, das heißt in der Montageposition des Mitnehmers 104. Das Positionierungselement 120 ist um die Achse 124 an der Tür-Innenplatte 102 (vgl. Figuren 1 bis 4) schwenkbar gelagert. Zumindest ein weiteres Positionierungselement 120 ist an der anderen Seite des Mitnehmers 104 angeordnet.

In der Ausführungsform der Figur 5 sind die Positionierungselemente 120 so ausgebildet, dass sie die Kraft F beim Eindrücken der Fensterscheibe 106 zwischen die Bakken 142 (vgl. Figur 4) aufnehmen können. Wenn nach der Montage der Fensterscheibe der Mitnehmer 104 nach oben verfahren wird, gleitet das Positionierungselement 120 aus der Ausnehmung 146, indem es sich im Uhrzeigersinn um die Achse 124 dreht. Nachdem das Positionierungselement 120 den Mitnehmer 104 vollständig freigegeben hat, schwenkt es um seine Achse 124 im Uhrzeigersinn in seine zweite Stellung, außerhalb des Verfahrwegs des Mitnehmers 104. Hierzu kann auf der Achse 124 eine Feder angeordnet sein, die eine Rückstellkraft auf das Positionierungselement 120 ausübt, um es in seine zweite Stellung im Uhrzeigersinn zu drehen.

Alternativ kann das Positionierungselement 120 auch auf der Achse 125 montiert werden, die der Achse 124 gegenüberliegt, so dass das Positionierungselement 120 von oben nach unten in die Ausnehmung 146 ragen kann. In diesem Fall wird der Mitnehmer 104 durch die Positionierungsmittel 118, die zwei der symmetrisch angeordneten Positionierungselemente 120 aufweist, in der Montageposition fixiert, ohne dass die Positionierungsmittel 118 dazu ausgebildet sind, die Kraft F aufzunehmen. Die Aufnahme der Kraft F erfolgt vielmehr durch das an den Mitnehmer 104 befestigte Seil 114 (vgl. Figur 1).

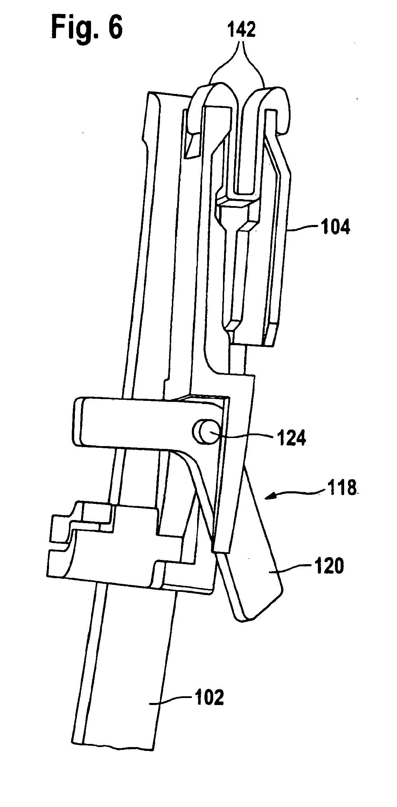

In der Ausführungsform der Figur 6 ist das Positionierungselement 120 winkelförmig ausgebildet und um die an dem Mitnehmer 104 ausgebildete Achse 124 schwenkbar gelagert. Die Figur 6 zeigt das Positionierungselement 120 in seiner ersten Stellung, in der es die Montageposition des Mitnehmers 104 relativ zu der Tür-Innenplatte 102 festlegt.

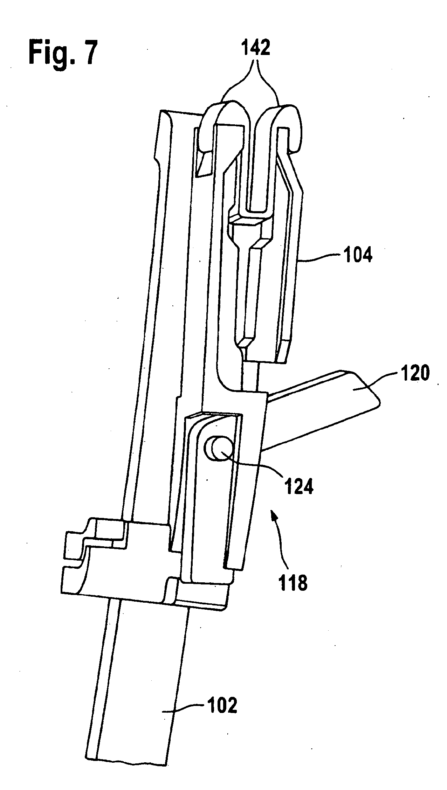

Die Figur 7 zeigt das Positionierungselement 120, nachdem es in seine zweite Stellung geschwenkt worden ist, in der es die Bewegung des Mitnehmers 104 freigibt. Beispielsweise verrastet das Positionierungselement 120 in dieser Stellung, so dass es beim Betrieb des Fensterhebers nicht ungewollt in seine erste Stellung gelangen kann.

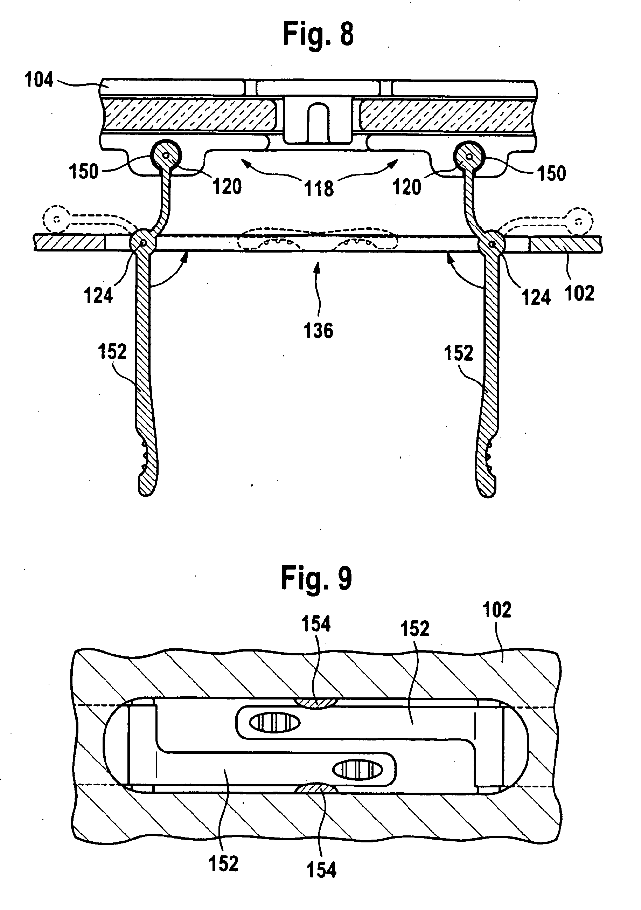

Die Figur 8 zeigt eine weitere Ausführungsform des Mitnehmers 104 und der Positionierungselemente 120. In der hier betrachteten Ausführungsform haben die Positionierungselemente 120 Eingriffselemente (entsprechend den Führungsstiften 140 der Ausführungsform der Figuren 3 und 4), die zur Einführung in Ausnehmungen 150 des Mitnehmers 104 dienen. Die Eingriffselemente sind um die Achsen 124 mit dem Sperrhebel 152 in dem gezeigten Richtungssinn schwenkbar, um die Eingriffselemente aus der gezeigten ersten Stellung in die gestrichelt dargestellte zweite Stellung zu drehen. Die Achsen sind hier an der Tür-Innenplatte 102 ausgebildet

Die Figur 9 zeigt einen Querschnitt der Tür-Innenplatte 102 im Bereich der Positionierungsmittel 118 der Ausführungsform der Figur 8. Die Figur 9 zeigt die Sperrhebel 152, nach dem Einschwenken in die zweite Stellung. Dort werden die Sperrhebel 152 durch Klemmelemente 154 arretiert.

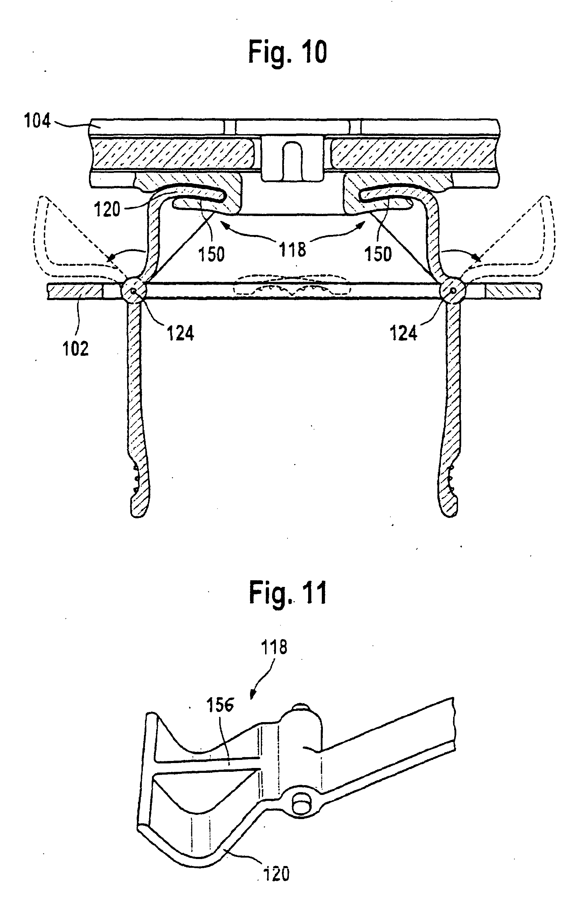

Die Figur 10 zeigt eine weitere Ausführungsform der Positionierungsmittel 118 mit einem klauenförmigen Positionierungselement 120 zum Eingriff in die Ausnehmung 150 des Mitnehmers 104. Die Figur 10 zeigt die Positionierungsmittel in der ersten Stellung; mit gestrichelten Linien ist die zweite Stellung der Positionierungsmittel in der Figur 10 dargestellt.

Die Figur 11 zeigt eine perspektivische Ansicht des Positionierungselements 120 in der Ausführungsform der Figur 10. Das Positionierungselement 120 ist klauenförmig ausgebildet und hat beispielsweise in etwa mittig einen Steg 156, der zur Aufnahme der Kraft F (vgl. Figuren 1 und 5) dient, wenn sich die Positionierungsmittel 118 in der ersten Stellung befinden.

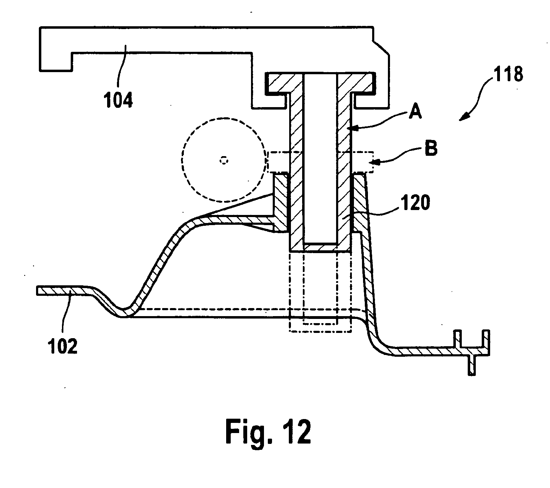

Die Figur 12 zeigt eine Ausführungsform der Positionierungsmittel 118 mit einem in etwa senkrecht zu der Tür-Innenplatte 102 verschiebbar gelagertem Positionierungselement 120. Durch-Verschiebung in etwa senkrecht zu der Tür-Innenplatte 102 kann das Positionierungselement 120 in die erste Stellung A und die zweite Stellung B gebracht werden. In dieser Ausführungsform ist das Positionierungselement in seinem oberen Bereich T-förmig ausgebildet, um in eine entsprechende Ausnehmung 150 des Mitnehmers 104 eingeführt zu werden.

### Bezugszeichenliste

- 100: Kraftfahrzeug-Tür
- 102: Tür-Innenplatte
- 104: Mitnehmer
- 106: Fensterscheibe
- 107: Scheibenloch
- 108: Rand
- 110: Bereich
- 112: Türbrüstung
- 114: Seil
- 116: Antriebstrommel
- 118: Positionierungsmittel
- 120: Positionierungselement
- 122: Anschlagsbereich
- 124: Achse
- 125: Achse
- 126: Lager
- 128: Anschlag
- 130: elastisches Element
- 132: Verfahrweg
- 134: Schnapphaken
- 136: Montageloch
- 138: Aufnahmeschlitz
- 140: Führungsstift
- 142: Backen
- 144: Schnappelement
- 146: Ausnehmung
- 150: Ausnehmung
- 152: Sperrhebel
- 154: Klemmelement
- 156: Steg

## Patentansprüche

1. Schienenlose Fensterheberanordnung mit
- einem Mitnehmer (104) für eine Fensterscheibe (106),
- einer Tür-Innenplatte (102),
- Positionierungsmitteln (118, 120, 122, 124, 125, 126, 128, 130, 134, 136, 138, 140, 146, 148, 152, 154, 156) zur Positionierung des Mitnehmers (104) relativ zu der Tür-Innenplatte (102) in einer Montageposition zur Montage der Fensterscheibe (106), wobei die Positionierungsmittel (118) eine erste und eine zweite Stellung einnehmen können, wobei die Positionierungsmittel (118) in der ersten Stellung die Montageposition definieren, und wobei die Positionierungsmittel (118) in der zweiten Stellung eine Bewegung des Mitnehmers (104) zum Öffnen und Schließen der montierten Fensterscheibe (106) freigeben,
**dadurch gekennzeichnet, dass**
die Positionierungsmittel (118) zwischen der ersten und der zweiten Stellung schwenkbar sind und die Positionierungsmittel (118) ein elastisches Element (130) zur Rückstellung in die zweite Stellung nach der Montage der Fensterscheibe (106) aufweisen.

2. Schienenlose Fensterheberanordnung nach Anspruch 1, **dadurch gekennzeichnet, dass** die Positionierungsmittel (118) so angeordnet sind, dass die Fensterscheibe (106) in der Montageposition über eine Türbrüstung (112) hinaus ragt.

3. Schienenlose Fensterheberanordnung nach Anspruch 1 oder 2, **dadurch gekennzeichnet, dass** der Mitnehmer (104) zur Ausbildung einer Rastverbindung (107,144) mit der Fensterscheibe (106) in der Montageposition ausgebildet ist.

4. Schienenlose Fensterheberanordnung nach Anspruch 1, 2 oder 3, **dadurch gekennzeichnet, dass** die Positionierungsmittel (118) in einem mittleren Bereich der Tür-Innenplatte (102) angeordnet sind.

5. Schienenlose Fensterheberanordnung nach einem der vorhergehenden Ansprüche, **dadurch gekennzeichnet, dass** die Positionierungsmittel (118) an der Tür-Innenplatte (102) beweglich gelagert und zur lösbaren Fixierung des Mitnehmers (104) in der ersten Stellung ausgebildet sind.

6. Schienenlose Fensterheberanordnung nach einem der vorhergehenden Ansprüche 1 bis 4, **dadurch gekennzeichnet, dass** die Positionierungsmittel (118) an dem Mitnehmer (104) beweglich gelagert und zur lösbaren Fixierung des Mitnehmers (104) in der ersten Stellung ausgebildet sind.

7. Schienenlose Fensterheberanordnung nach einem der vorhergehenden Ansprüche, **dadurch gekennzeichnet, dass** die Positionierungsmittel (118) ein Eingriffselement (120; 140) für die lösbare Fixierung aufweisen.

8. Schienenlose Fensterheberanordnung nach einem der vorhergehenden Ansprüche, **dadurch gekennzeichnet, dass** die Positionierungsmittel (118) zwischen der ersten und der zweiten Stellung verschiebbar sind.

9. Schienenlose Fensterheberanordnung nach einem der vorhergehenden Ansprüche, **dadurch gekennzeichnet, dass** die Positionierungsmittel (118) ganz oder teilweise von der Tür-Innenplatte (102) oder dem Mitnehmer (104) lösbar sind, um die Bewegung des Mitnehmers (104) zum Öffnen oder Schließen der montierten Fensterscheibe (106) freizugeben.

10. Schienenlose Fensterheberanordnung nach einem der vorhergehenden Ansprüche, **dadurch gekennzeichnet, dass** die Fensterheberanordnung eine oder mehrere Klemmelemente (154) zur Feststellung der Positionierungsmittel (118) in der zweiten Stellung aufweist.

11. Schienenlose Fensterheberanordnung nach einem der vorhergehenden Ansprüche, **dadurch gekennzeichnet, dass** die Positionierungsmittel (118) zur Aufnahme einer zur Ausbildung der Rastverbindung ausgeübten Kraft ausgebildet sind.

12. Schienenlose Fensterheberanordnung nach einem der vorhergehenden Ansprüche, **dadurch gekennzeichnet, dass** die Fensterheberanordnung einen Glasdrop von nahe 100% aufweist.

13. Türmodul mit einer Fensterheberanordnung nach einem der vorhergehenden Ansprüche.

14. Kraftfahrzeugtür mit einer Fensterheberanordnung nach einem der vorhergehenden Ansprüche 1 bis 12.

## Claims

1. Railless window winder arrangement, with
- a driver (104) for a window pane (106),
- an inside door panel (102),
- positioning means (118, 120, 122, 124, 125, 126, 128, 130, 134, 136, 138, 140, 146, 148, 152, 154, 156) for positioning the driver (104) relative to the inside door panel (102) in an installation position for installing the window pane (106), wherein the positioning means (118) can take up a first position and a second position, wherein, in the first position, the positioning means (118) define the installation position, and wherein, in the second position, the positioning means (118) enable a movement of the driver (104) for opening and closing the fitted window pane (106),
**characterized in that** the positioning means (118) are pivotable between the first position and the second position, and the positioning means (118) have an elastic element (130) for resetting them into the second position after the window pane (106) is installed.

2. Railless window winder arrangement according to Claim 1, **characterized in that** the positioning means (118) are arranged in such a manner that the window pane (106) projects over a door breast (112) in the installation position.

3. Railless window winder arrangement according to Claim 1 or 2, **characterized in that** the driver (104) is designed for forming a latching connection (107, 144) with the window pane (106) in the installation position.

4. Railless window winder arrangement according to Claim 1, 2 or 3, **characterized in that** the positioning means (118) are arranged in a central region of the inside door panel (102).

5. Railless window winder arrangement according to one of the preceding claims, **characterized in that** the positioning means (118) are mounted movably on the inside door panel (102) and are designed for releasably fixing the driver (104) in the first position.

6. Railless window winder arrangement according to one of the preceding Claims 1 to 4, **characterized in that** the positioning means (118) are mounted movably on the driver (104) and are designed for releasably fixing the driver (104) in the first position.

7. Railless window winder arrangement according to one of the preceding claims, **characterized in that** the positioning means (118) have an engagement element (120; 140) for the releasable fixing.

8. Railless window winder arrangement according to one of the preceding claims, **characterized in that** the positioning means (118) are displaceable between the first position and the second position.

9. Railless window winder arrangement according to one of the preceding claims, **characterized in that** the positioning means (118) are entirely or partially releasable from the inside door panel (102) or the driver (104) in order to enable the movement of the driver (104) for opening or closing the fitted window pane (106).

10. Railless window winder arrangement according to one of the preceding claims, **characterized in that** the window winder arrangement has one or more clamping elements (154) for securing the positioning means (118) in the second position.

11. Railless window winder arrangement according to one of the preceding claims, **characterized in that** the positioning means (118) are designed for absorbing a force exerted in order to form the latching connection.

12. Railless window winder arrangement according to one of the preceding claims, **characterized in that** the window winder arrangement has a glass drop of approximately 100%.

13. Door module with a window winder arrangement according to one of the preceding claims.

14. Motor vehicle door with a window winder arrangement according to one of the preceding Claims 1 to 12.

## Revendications

1. Agencement de lève-glace sans rail, comprenant :
- un dispositif d'entraînement (104) pour une vitre (106),
- un panneau interne de porte (102),
- des moyens de positionnement (118, 120, 122, 124, 125, 126, 128, 130, 134, 136, 138, 140, 146, 148, 152, 154, 156) pour positionner le dispositif d'entraînement (104) par rapport au panneau interne de porte (102) dans une position de montage pour le montage de la vitre (106), les moyens de positionnement (118) pouvant adopter une première et une deuxième position, les moyens de positionnement (118) définissant, dans la première position, la position de montage, et les moyens de positionnement (118), libérant, dans la deuxième position, un mouvement du dispositif d'entraînement (104) pour ouvrir et fermer la vitre montée (106),
**caractérisé en ce que**
les moyens de positionnement (118) peuvent pivoter entre la première et la deuxième position et les moyens de positionnement (118) présentent un élément élastique (130) pour le rappel dans la deuxième position après le montage de la vitre (106).

2. Agencement de lève-glace sans rail selon la revendication 1, **caractérisé en ce que** les moyens de positionnement (118) sont disposés de telle sorte que la vitre (106), dans la position de montage, dépasse au-delà d'une rampe de la porte (112).

3. Agencement de lève-glace sans rail selon la revendication 1 ou 2, **caractérisé en ce que** le dispositif d'entraînement (104) est réalisé pour réaliser une connexion par encliquetage (107, 144) à la vitre (106) dans la position de montage.

4. Agencement de lève-glace sans rail selon la revendication 1, 2 ou 3, **caractérisé en ce que** les moyens de positionnement (118) sont disposés dans une région centrale du panneau interne de porte (102).

5. Agencement de lève-glace sans rail selon l'une quelconque des revendications précédentes, **caractérisé en ce que** les moyens de positionnement (118) sont montés de manière déplaçable sur le panneau interne de porte (102) et sont réalisés pour permettre la fixation amovible du dispositif d'entraînement (104) dans la première position.

6. Agencement de lève-glace sans rail selon l'une quelconque des revendications précédentes 1 à 4, **caractérisé en ce que** les moyens de positionnement (118) sont montés de manière déplaçable sur le dispositif d'entraînement (104), et sont réalisés pour permettre la fixation amovible du dispositif d'entraînement (104) dans la première position.

7. Agencement de lève-glace sans rail selon l'une quelconque des revendications précédentes, **caractérisé en ce que** les moyens de positionnement (118) présentent un élément d'engagement (120 ; 140) pour la fixation amovible.

8. Agencement de lève-glace sans rail selon l'une quelconque des revendications précédentes, **caractérisé en ce que** les moyens de positionnement (118) peuvent être déplacés entre la première et la deuxième position.

9. Agencement de lève-glace sans rail selon l'une quelconque des revendications précédentes, **caractérisé en ce que** les moyens de positionnement (118) sont complètement ou partiellement détachables du panneau interne de porte (102) ou du dispositif d'entraînement (104), afin de libérer le mouvement du dispositif d'entraînement (104) pour l'ouverture ou la fermeture de la vitre montée (106).

10. Agencement de lève-glace sans rail selon l'une quelconque des revendications précédentes, **caractérisé en ce que** l'agencement de lève-glace présente un ou plusieurs éléments de serrage (154) pour la fixation des moyens de positionnement (118) dans la deuxième position.

11. Agencement de lève-glace sans rail selon l'une quelconque des revendications précédentes, **caractérisé en ce que** les moyens de positionnement (118) sont réalisés pour recevoir une force exercée pour réaliser la connexion par encliquetage.

12. Agencement de lève-glace sans rail selon l'une quelconque des revendications précédentes, **caractérisé en ce que** l'agencement de lève-glace présente une descente de vitre de pratiquement 100%.

13. Module de porte comprenant un agencement de lève-glace selon l'une quelconque des revendications précédentes.

14. Porte de véhicule automobile comprenant un agencement de lève-glace selon l'une quelconque des revendications précédentes 1 à 12.
